**Europäisches Patentamt**

**European Patent Office**

**Office européen des brevets**

(19)

(11) Numéro de publication : **0 344 039 B1**

(12) **FASCICULE DE BREVET EUROPEEN**

(45) Date de publication du fascicule du brevet :
**22.07.92 Bulletin 92/30**

(51) Int. Cl.$^5$ : **F16D 25/14, F15B 9/08**

(21) Numéro de dépôt : **89401314.3**

(22) Date de dépôt : **11.05.89**

(54) **Dispositif d'assistance pneumatique de commande d'embrayage.**

(30) Priorité : **27.05.88 FR 8807072**

(43) Date de publication de la demande :
**29.11.89 Bulletin 89/48**

(45) Mention de la délivrance du brevet :
**22.07.92 Bulletin 92/30**

(84) Etats contractants désignés :
**DE ES IT**

(56) Documents cités :
**GB-A- 1 241 180**
**US-A- 4 061 079**

(73) Titulaire : **RENAULT VEHICULES
INDUSTRIELS Société Anonyme dite:
129 rue Servient "La Part Dieu"
F-69003 Lyon (FR)**

(72) Inventeur : **Ellenberger, Gérard
Hameau Les Charpes
Saint-Sorlin F-69440 Morant (FR)**

(74) Mandataire : **Chassagnon, Jean Alain et al
8/10, avenue Emile Zola
F-92109 Boulogne-Billancourt (FR)**

EP 0 344 039 B1

## Description

La présente invention se rapporte à un dispositif d'assistance pneumatique, notamment pour la commande d'un embrayage d'un véhicule automobile.

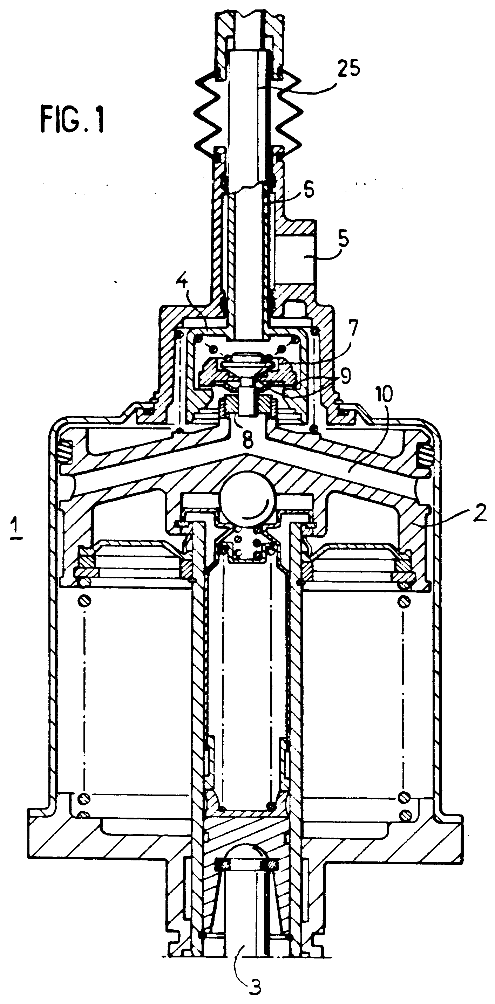

La commande la plus répandue des embrayages notamment de poids lourd est actuellement la commande en position par transfert d'un volume d'huile, avec une assistance pneumatique. Afin d'éviter les ennuis des systèmes à transfert d'huile, il a été proposé et développé des systèmes positionneurs pneumatiques et mécaniques,comme celui illustré sur la figure 1. Le système représenté est un système suiveur avec une entrée à faible énergie de commande, et une sortie à énergie disponible importante. Le déplacement à la sortie, au jeu initial près, est parfaitement linéaire en fonction de la consigne d'entrée.

Le dispositif est constitué d'un corps dans lequel est aménagé un vérin 1 avec son piston pneumatique 2, qui déplacent une tige d'actionnement 3 reliée au mécanisme d'embrayage. Un poussoir 4 est alimenté en air comprimé par des orifices 5 et 6. Un clapet 7 contrôle l'arrivée d'air comprimé dans la chambre du vérin 1, un ressort maintient ce clapet d'admission 7 fermé en situation normale, l'étanchéité se faisant sur un siège 9. La chambre du vérin 1 est reliée à l'atmosphère par un orifice 10 du fait qu'un jeu existe entre le piston 2 et le siège 8 du clapet. Le déplacement du poussoir 4 par la tige 25 permet de fermer l'échappement du clapet 7 par le siège 8 et d'ouvrir l'admission par le siège 9.

Le défaut de ce type de système précédemment décrit est paradoxalement d'être trop fidèle, c'est-à-dire de suivre trop linéairement le déplacement de la consigne d'entrée. Or, la caractéristique des embrayages habituellement utilisés est de nécessiter une garde à l'ouverture importante. Avec une commande linéaire, cette garde se retrouve au niveau du pédalier et diminue d'autant la course de la pédale pour le dosage du couple, et par là-même la progressivité de la commande. Le but de la présente invention est de proposer un dispositif d'assistance pneumatique pour la commande d'un embrayage d'un véhicule automobile qui donne un déplacement à la sortie non-linéaire par rapport à la consigne d'entrée, afin d'améliorer la progressivité de l'embrayage commandé.

Selon un mode de réalisation de l'invention, le dispositif d'assistance pneumatique pour la commande d'un embrayage comporte un vérin actionné par un système de poussoirs lié à l'entrée du mouvement, et dont le piston est lié à la sortie du mouvement. Le système de poussoirs comporte un poussoir amont et un poussoir aval qui coopèrent au moyen d'un vérin additionnel. L'alimentation du vérin se fait par un clapet manoeuvré par le poussoir aval, et l'alimentation du vérin additionnel se fait par un clapet manoeuvré par le poussoir amont ; de manière que, dans un premier temps, la course du poussoir amont donne un déplacement équivalent à la sortie du mouvement et, que dans un deuxième temps, le déplacement de la sortie de mouvement est donné par la course effective du vérin additionnel, tandis que le poussoir amont parcourt la très faible course restante jusqu'à venir en butée, cette faible course permettant d'assurer l'ouverture du clapet d'alimentation du vérin additionnel. Ainsi l'actionneur suivant l'invention se comporte comme un système suiveur pendant une partie de la course qui correspond à la course de patinage de l'embrayage, puis pendant la dernière et petite partie de la course d'entrée, la sortie n'est plus suiveuse mais se déplace en tout ou rien sur toute la course d'ouverture de l'embrayage.

D'autres caractéristiques et avantages de la présente invention ressortiront de la description qui suit le mode de réalisation donné à titre d'exemple en référence aux dessins annexés sur lesquels :

– la figure 1 est une coupe axiale d'un dispositif d'assistance pneumatique connu .

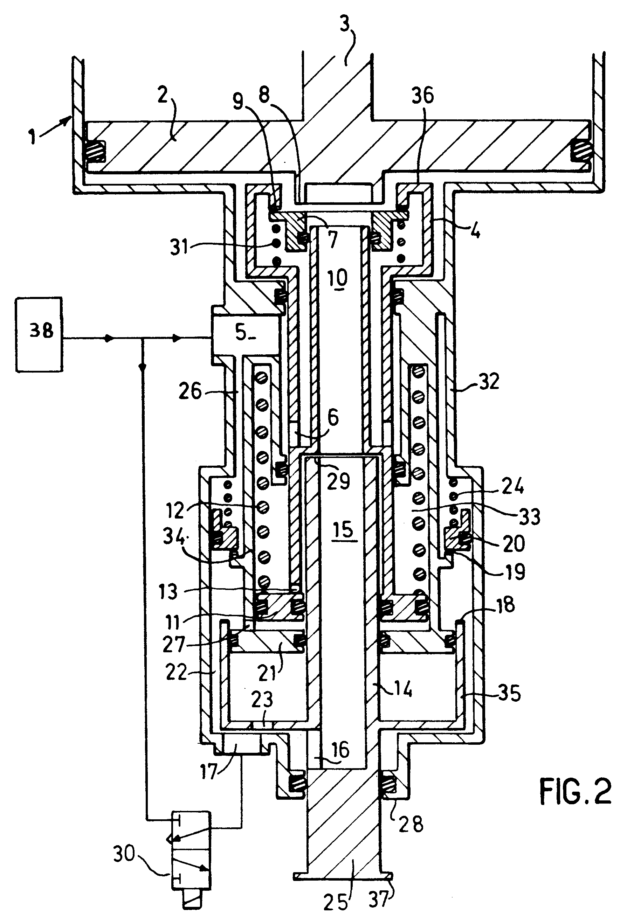

– la figure 2 est une coupe axiale de l'ensemble du dispositif selon l'invention.

Le dispositif d'assistance pneumatique de commande d'un embrayage comporte un vérin référencé 1 dans son ensemble qui est actionné par un système de deux poussoirs liés à l'entrée de mouvement. Ce vérin 1 a un piston 2 qui est lié à la sortie de mouvement. Le système de poussoirs comporte un poussoir amont référencé 14 dans son ensemble et un poussoir aval référencé 4 dans son ensemble. Ces deux poussoirs coopèrent au moyen d'un vérin additionnel référencé 33 dans son ensemble. L'alimentation du vérin 1 se fait par un clapet 7, qui est manoeuvré par le poussoir aval 4, et l'alimentation du vérin additionnel 33 se fait par un clapet 20, qui est manoeuvré par le poussoir amont 14. L'ensemble est agencé de façon que, dans un premier temps, la course du poussoir amont 14 donne un déplacement équivalent à la sortie de mouvement et que, dans un deuxième temps, le déplacement de la sortie de mouvement est donné par la course effective du vérin additionnel 33, alors que pendant ce temps le poussoir amont 14 parcours la très faible course restante jusqu'à venir en butée. Cette faible course permet d'assurer l'ouverture du clapet 20 pour effectuer l'alimentation du vérin additionnel 33.

L'ensemble du dispositif est intégré dans un corps 32. L'une des extrémités de ce corps 32 constitue le corps du vérin 1, et l'autre extrémité comporte un rebord 28 de fin de course du poussoir amont 14. Le poussoir amont 14 possède un appui simple 29 qui agit sur le poussoir aval 4. Le poussoir aval 4 et le poussoir amont 14 sont montés dans le prolongement l'un de l'autre.

Une paroi annulaire 34 interne du corps 32 se termine par une paroi 21 d'extrémité et constitue le corps du vérin additionnel 33. Les poussoirs amont 14 et aval 4 coulissent dans cette paroi annulaire 34.

Le poussoir aval 4 comporte à son extrémité située du côté du vérin 1 un siège 9, qui coopère avec le clapet 7 et son ressort 31 de rappel. A l'autre extrémité du poussoir aval 4, il est agencé un piston annulaire 11 du vérin additionnel 33, qui coulisse dans ladite paroi annulaire 34, et qui a un ressort de rappel 12. Ce dernier ensemble constitue ainsi le vérin additionnel 33.

Le poussoir amont 14 comporte un élément cylindrique 35, dont l'extrémité 18 agit sur le clapet 20 avec son ressort 24. Le clapet 20 et son ressort 24 sont montés à l'extérieur de la paroi annulaire 34. Le clapet 20 coopère avec un siège 19 qui est disposé à l'extérieur de la paroi annulaire 34. L'élément cylindrique 35 coulisse sur la paroi d'extrémité 21. Le poussoir amont 14 a à son extrémité extérieure 25 une collerette 37 de fin de course.

Le poussoir aval 4 a une face d'appui 36 qui agit sur le piston 2 du vérin 1, en cas de déficience de la source extérieure de pression pneumatique.

L'alimentation du vérin 1 et du vérin additionnel 33 s'effectue au moyen d'un orifice 5 disposé dans le corps 32 à partir d'une source de pression pneumatique 38. L'alimentation du vérin 1 se fait par un orifice 6 disposé dans le poussoir aval 4, et l'alimentation du vérin additionnel 33 s'effectue par un orifice 27 disposé à l'extrémité de la paroi annulaire 34. L'échappement s'effectue au moyen du conduit 10 central du poussoir amont 14. De plus un orifice 16 est disposé à l'extrémité du conduit 15 central dans le poussoir amont 14, et un orifice 17 est aménagé dans le corps 32. Enfin un trou d'évent 13 est disposé dans le poussoir aval 4, et un trou d'évent 23 est aménagé dans le poussoir amont 14.

On obtient ainsi une alimentation centralisée par l'orifice 5 et un échappement centralisé par l'orifice 17. Une électrovanne 30 du type 3/2 est disposée entre l'orifice 5 d'alimentation et l'orifice 17 d'échappement. Enfin la tige d'actionnement 3 du vérin 1 comprend un système de rattrapage d'usure.

Le poussoir aval 4 se déplace parallèlement au piston 2, et il est déplacé sous l'action du poussoir amont 14 grâce à l'appui simple 29. L'action de commande se fait par l'extrémité extérieure 25 du poussoir 14.

Le poussoir aval 4 est alimenté par une alimentation fixe au moyen de l'orifice 5, et par une alimentation glissante au moyen de l'orifice 6. L'air comprimé reste en attente derrière le clapet 7 à double action. Le clapet 7 est un clapet d'admission lorsqu'il se décolle du siège 9, et c'est un clapet d'échappement lorsque l'extrémité 8 du piston 2 n'est pas en appui sur le clapet 7. L'échappement de l'air de la chambre du vérin 1 se fait par le conduit 10 central du poussoir aval 4, par le conduit 15 central du poussoir amont 14, en prolongement du conduit 10, et par les orifices 16 et 17.

Pendant tout le temps où le poussoir amont 14 ne vient pas en contact par son extrémité 18 contre le clapet 20, l'ensemble se comporte comme un simple système positionneur ; c'est-à-dire que le piston 2 suit le déplacement dans un sens ou dans l'autre du poussoir aval 4 qui est déplacé par l'action du poussoir amont 14.

Le poussoir aval 14 comporte à son extrémité le piston pneumatique annulaire 11 sur lequel peut agir l'air comprimé par la réaction de la paroi 21 d'extrémité solidaire de la paroi annulaire 34. La chambre de ce vérin additionnel 33 est alimentée par l'orifice 27. Durant tout le temps où l'extrémité 18 du poussoir 14 n'est pas en contact avec le clapet 20, la chambre du vérin additionnel 33 est reliée à l'atmosphère par un conduit 22 annulaire disposé entre le corps 32 et l'élément cylindrique 35 du poussoir amont 14 et l'orifice 17 général d'échappement.

Après une course déterminée du poussoir amont 14 (pendant laquelle le poussoir aval 4 se déplace de la même valeur), l'extrémité 18 vient en contact avec le clapet 20, et elle ferme l'échappement. Puis le clapet 20 qui est maintenu par le ressort 24 est soulevé par l'extrémité 18 du poussoir amont 14. De ce fait, elle ouvre l'admission d'air comprimé entre le siège 19 et le clapet 20. Cet air comprimé est acheminé par le conduit 26 annulaire qui est compris entre le corps 32 et la paroi annulaire 34. L'air comprimé ne peut pas sortir par le conduit 22 annulaire d'échappement, puisque le passage entre l'extrémité 18 et le clapet 20 est fermé.

L'air comprimé entre donc par l'orifice 27 entre la paroi 21 d'extrémité et le piston annulaire 11, et elle provoque le déplacement jusqu'en bout de course du poussoir aval 4, qui se désolidarise du poussoir amont 14, puisque ce dernier ne se déplace plus du fait de la mise en butée de la collerette 37 de l'extrémité 25 sur le rebord 28 du corps 32.

Dans la manoeuvre en sens inverse du poussoir amont 14, il y a, après une toute petite course, la fermeture du clapet 20 d'admission sur le siège 19, puis l'ouverture de l'échappement entre l'extrémité 18 et le clapet 20. Ceci provoque, sous la poussée du ressort 12 de rappel, le retour du poussoir aval 4 en appui sur le poussoir amont 14, et le système redevient suiveur. Il faut noter que les trous d'évent 13 et 23 permettent le déplacement des poussoirs 4 et 14.

L'intérêt de l'échappement unique par l'orifice 17 est d'offrir la possibilité de verrouiller, par une commande électrique, l'embrayage en position ouverte par le basculement de l'électrovanne 30 qui empêche l'air comprimé de sortir de l'appareil.

## Revendications

1. Dispositif d'assistance pneumatique, notamment pour la commande d'un embrayage, comportant un vérin (1) actionné par un système de poussoirs lié à l'entrée de mouvement, et dont le piston (2) est lié à la sortie de mouvement ; caractérisé en ce que le système de poussoirs comporte un poussoir amont (14) et un poussoir aval (4) qui coopèrent au moyen d'un vérin additionnel (33), l'alimentation du vérin 1 se faisant par un clapet (7) manoeuvré par le poussoir aval (4), et l'alimentation du vérin additionnel (33) se faisant par un clapet (20) manoeuvré par le poussoir amont (14) ; de manière que, dans un premier temps, la course du poussoir amont (14) donne un déplacement équivalent à la sortie de mouvement et que, dans un deuxième temps, le déplacement de la sortie de mouvement est donné par la course effective du vérin additionnel (33), tandis que le poussoir amont (14) parcourt la très faible course restante jusqu'à venir en butée, cette faible course permettant d'assurer l'ouverture du clapet (20) d'alimentation du vérin additionnel (33).

2. Dispositif d'assistance pneumatique selon la revendication 1 caractérisé en ce qu'il est disposé dans un corps (32), dont une des extrémités constitue le corps du vérin (1), et dont l'autre extrémité comporte un rebord (28) de fin de course du poussoir amont (14) qui possède un appui simple (29) du poussoir aval (4) monté dans son prolongement ; une paroi annulaire (34) interne du corps (32) se termine par une paroi (21) d'extrémité et constitue le corps du vérin additionnel (33) dans lequel coulissent les poussoirs amont (14) et aval (4) ; le poussoir aval (4) comporte à son extrémité du côté du vérin (1) un siège (9) qui coopère avec le clapet (7) et son ressort (31) de rappel, et à son autre extrémité le piston annulaire (11) du vérin additionnel (33) qui coulisse dans ladite paroi annulaire (34) et qui a un ressort de rappel (12) ; le poussoir amont (14) comporte un élément cylindrique (35) dont l'extrémité (18) agit sur le clapet (20) avec son ressort (24) qui sont montés à l'extérieur de la paroi annulaire (34) ; le clapet (20) coopérant avec un siège (19) disposé sur ladite paroi annulaire (34), ledit élément cylindrique (35) coulissant sur la paroi d'extrémité (21), le poussoir amont (14) ayant à son extrémité extérieure (25) une collerette (37) de fin de course ; le poussoir aval (4) ayant une face d'appui (36) qui agit sur le piston (2) du vérin (1) après qu'une extrémité (8) du piston (2) ait repoussé le clapet (7) dans le cas d'une insuffisance de pression d'alimentation ; l'alimentation des vérins (1) et (33) s'effectuant au moyen d'un orifice (5) dans le corps (32), d'un orifice (6) dans le poussoir aval (4) et d'un orifice (27) dans la paroi annulaire (34) ; l'échappement s'effectuant au moyen des conduits (10) et (15) centraux desdits poussoirs, d'un orifice (17) dans le corps (32), d'un orifice (16) dans le poussoir amont (14), d'un trou d'évent (13) dans le poussoir aval (4) et d'un trou d'évent (23) dans le poussoir amont (14), afin d'obtenir un échappement centralisé.

3. Dispositif d'assistance pneumatique selon la revendication 2 caractérisé en ce qu'une électrovanne (30) du type 3/2 est disposée entre l'orifice (5) d'alimentation et l'orifice (17) d'échappement.

4. Dispositif d'assistance pneumatique selon la revendication 1 caractérisé en ce que la tige d'actionnement (3) du vérin (1) comprend un système de rattrapage d'usure.

## Patentansprüche

1. Pneumatische Hilfseinrichtung, insbesondere für die Kupplungssteuerung, mit einem Stellzylinder (1), der durch eine Druckschalteranordnung betätigbar ist, die mit dem Bewegungseingang verbunden ist, während der Zylinderkolben (2) mit dem Bewegungsausgang verbunden ist, dadurch gekennzeichnet, daß die Druckschalteranordnung einen stromaufwärtigen und einen stromabwärtigen Druckschalter (14 bzw. 4) aufweist, die mittels eines zusätzlichen Stellzylinders (33) zusammenwirken, wobei die Versorgung des Stellzylinders (1) mittels eines Ventils (7) erfolgt, das durch den stromabwärtigen Druckschalter (4) gesteuert wird und die Versorgung des zusätzlichen Stellzylinders (33) mittels eines Ventils (20) erfolgt, das durch den stromaufwärtigen Druckschalter (14) gesteuert wird, derart, daß zuerst der Schaltweg des stromaufwärtigen Druckschalters (14) zu einer äquivalenten Verschiebung am Bewegungsausgang führt und danach die Verschiebung des Bewegungsausgangs durch den effektiven Schaltweg des zusätzlichen Stellzylinders (33) gegeben ist, während der stromaufwärtige Druckschalter (14) den sehr geringen verbleibenden Schaltweg bis zum Anschlag durchläuft und dieser geringe Schaltweg die Öffnung des Versorgungsventils (20) des zusätzlichen Stellzylinders (33) gewährleistet.

2. Pneumatische Hilfseinrichtung nach Anspruch 1 dadurch gekennzeichnet, daß sie in einem Gehäuse (32) angeordnet ist, dessen eines Ende das Gehäuse des Stellzylinders (1) bildet und dessen anderes Ende einen Anschlagrand (28) für den stromaufwärtigen Druckschalter (14) bildet mit einem einfachen Anschlag (29) in seiner Verlängerung für den stromabwärtigen Druckschalter (4); eine ringförmige Innenwand (34) des Gehäuses (32) endet in einer Endwand (21) und bildet das Gehäuse des zusätzlichen Stellzylinders (33), in dem der stromaufwärtige Druckschalter (14) und der stromabwärtige Druckschalter (4) gleiten; der stromabwärtige Druckschalter (4) weist an seinem dem Stellzylinder (1) zugewandten Ende einen Sitz (9) auf, der mit dem Ventil (7) und dessen Rückholfeder (31) zusammenwirkt und an seinem anderen Ende den ringförmigen Zylinderkolben (11) des zusätzlichen Stellzylinders (33), der in der ringförmigen Wand (34) gleitet und eine Rückholfeder (12) aufweist; der stromaufwärtige Druckschalter (14) weist ein zylindrisches Bauteil (35) auf, dessen Ende (18) auf das Ventil (20) und dessen Feder (24) einwirkt, welche im Inneren der ringförmigen Wand (34) angeordnet sind; das Ventil (20) wirkt mit einem Sitz (19) zusammen, der an der ringförmigen Wand (34) vorgesehen ist, wobei das zylindrische Bauteil (35) an der Endwand (21) entlang gleitet und der stromaufwärtige Druckschalter (14) an seinem äußeren Ende (25) einen Ringflansch (37) als Anschlag aufweist; der stromabwärtige Druckschalter (4) weist eine Anschlagfläche (36) auf, die auf den Zylinderkolben (2) des Stellzylinders (1) wirkt, nachdem ein Ende (8) des Zylinderkolbens (2) im Falle eines nicht ausreichenden Versorgungsdrucks das Ventil (7) betätigt hat; die Versorgung der Stellzylinder (1 und 33) erfolgt mittels einer Öffnung (5) im Gehäuse (32), einer Öffnung (6) im stromabwärtigen Druckschalter (4) und einer Öffnung (27) in der ringförmigen Wand (34); der Auslaß erfolgt mittels zentraler Leitungen (10 und 15) in den Druckschaltern, einer Öffnung (17) im Gehäuse (32), einer Öffnung (16) im stromaufwärtigen Druckschalter (14), einer Lüftungsöffnung (13) im stromabwärtigen Druckschalter (4) und einer Lüftungsöffnung (23) im stromaufwärtigen Druckschalter (14), um einen zentralisierten Abfluß zu erhalten.

3. Pneumatische Hilfseinrichtung nach Anspruch 2, dadurch gekennzeichnet, daß ein Elektroventil (30) vom Typ 3/2 in der Zufuhröffnung (5) und der Auslaßöffnung (17) vorgesehen ist.

4. Pneumatische Hilfseinrichtung nach Anspruch 1, dadurch gekennzeichnet, daß die Betätigungsstange (3) des Stellzylinders (1) eine Anordnung für die Abnutzungsnachstellung angeordnet ist.

**Claims**

1. A pneumatic servo device, in particular for the control of a clutch, comprising a jack (1) which is actuated by a system of thrust members connected to the motion input and the piston (2) of which is connected to the motion output; characterised in that the system of thrust members comprises an upstream thrust member (14) and a downstream thrust member (4) which co-operate by means of an additional jack (33), the feed for the jack (1) being by means of a valve (7) operated by the downstream thrust member (4) and the feed for the additional jack (33) being by means of a valve (20) operated by the upstream thrust member (14), in such a way that in a first phase the travel of the upstream thrust member (14) gives an equivalent displacement to the motion output and in a second phase displacement of the motion output is given by the effective travel of the additional jack (33) while the upstream thrust member (14) covers the very short remaining travel until reaching an abutment condition, said short travel making it possible to provide for opening of the valve (20) for feeding the additional jack (33).

2. A pneumatic servo device according to claim 1 characterised in that it is disposed in a body (32), of which one of the ends forms the body of the jack (1) while the other end comprises an edge portion (28) for the end of the travel of the upstream thrust member (14) which involves simple contact (29) with the downstream thrust member (4) which is mounted in line therewith; an internal annular wall (34) of the body (32) is terminated with an end wall (21) and constitutes the body of the additional jack (33) in which the upstream and downstream thrust members (14, 4) slide; the downstream thrust member (4) comprises at its end on the jack (1) side a seat (9) which co-operates with the valve (7) and its return spring (31) and at its other end the annular piston (11) of the additonal jack (33) which slides in said annular wall (34) and which has a return spring (12); the upstream thrust member (14) comprises a cylindrical element (35) of which the end (18) acts on the valve (20) with its spring (24) which are mounted outside the annular wall (34); the valve (20) co-operating with a seat (19) disposed on said annular wall (34), said cylindrical element (35) sliding on the end wall (21), the upstream thrust member (14) having at its outward end (25) an end-of-travel collar portion (37); the downstream thrust member (4) having a contact face (36) which acts on the piston (2) of the jack (1) after an end (8) of the piston (2) has pushed the valve (7) back in the event of an insufficient feed pressure; the feed for the jacks (1) and (33) being provided by means of an orifice (5) in the body (32), an orifice (6) in the downstream thrust member (4) and an orifice (27) in the annular wall (34); the exhaust being effected by means of central conduits (10) and (15) in said thrust members, an orifice (17) in the body (32), an orifice (16) in the upstream thrust member (14), a vent hole (13) in the downstream thrust member (4) and a vent hole (23) in the upstream thrust member (14) in order to provide a centralised exhaust.

3. A pneumatic servo device according to claim 2 characterised in that an electrically operated valve ( 30 ) of the 3/2 type is disposed between the feed orifice (5) and the exhaust orifice (17).

4. A pneumatic servo device according to claim 1 characterised in that the actuating rod (3) of the jack (1) comprises a wear take-up system.

FIG.1

FIG.2